# EUROPÄISCHE PATENTSCHRIFT

(11) **EP 4 045 384 B1**
(45) Veröffentlichungstag und Bekanntmachung des Hinweises auf die Patenterteilung: **19.02.2025**
(21) Anmeldenummer: 20800797.1
(22) Anmeldetag: 15.10.2020
(51) Int. Cl.: B62D 1/06

(54) **VORRICHTUNG UND VERFAHREN ZUM STOFFSCHLÜSSIGEN VERBINDEN VON MINDESTENS EINEM MATERIALSEGMENT MIT EINER LENKVORRICHTUNG**
DEVICE AND METHOD FOR BONDING AT LEAST ONE MATERIAL SEGMENT TO A STEERING DEVICE
DISPOSITIF ET PROCÉDÉ DE LIAISON D'AU MOINS UN SEGMENT DE MATÉRIAU À UN DISPOSITIF DE DIRECTION

(30) Priorität: 16.10.2019 DE 102019215945
(43) Veröffentlichungstag der Anmeldung: 24.08.2022
(73) Patentinhaber: Joyson Safety Systems Germany GmbH, 63743 Aschaffenburg (DE)
(72) Erfinder: HOERNER, Stefan, 63739 Aschaffenburg (DE); HAINES, Daniel, 63857 Waldaschaff (DE); GREDIC, Senad, 61440 Oberursel (DE)
(74) Vertreter: Maikowski & Ninnemann Patentanwälte Partnerschaft mbB
(86) Internationale Anmeldenummer: PCT/EP2020/079083
(87) Internationale Veröffentlichungsnummer: WO 2021/074317

(56) Entgegenhaltungen:
- EP-A1- 1 531 036
- DE-A1- 102007 031 014
- DE-B4- 102007 031 014
- JP-A- 2011 126 395

## Beschreibung

Die Erfindung betrifft eine Vorrichtung zum stoffschlüssigen Verbinden von mindestens einem Materialsegment mit einer Lenkvorrichtung gemäß dem Oberbegriff des Anspruchs 1 sowie ein Verfahren zum stoffschlüssigen Verbinden von mindestens einem Materialsegment mit einer Lenkvorrichtung gemäß dem Oberbegriff des Anspruchs 9.

Aus den Stand der Technik ist die Ummantelung von Lenkradkränzen mit Materialsegmenten (z.B. mit Lederbezügen) bekannt. So wird in der DE 10 2007 031 014 A1 ein Verfahren zur Ummantelung eines Lenkradsegmentes mit einem Lederzuschnitt beschrieben. Weitere Vorrichtungen zum stoffschlüssigen Verbinden von einem Materialsegment mit einer Lenkvorrichtung sind in der JP 2011 126395 A und der EP 1 531 036 A1 beschrieben.

Die der Erfindung zugrunde liegende zu lösende Aufgabe besteht darin, eine Vorrichtung beziehungsweise ein Verfahren zum effizienteren Verbinden eines Materialsegments mit einer Lenkvorrichtung bereitzustellen.

Diese Aufgabe wird durch eine Vorrichtung mit den Merkmalen des Anspruchs 1 beziehungsweise einem Verfahren mit den Merkmalen des Anspruchs 9 gelöst.

Es wird eine Vorrichtung zum stoffschlüssigen Verbinden von mindestens einem Materialsegment mit einer Lenkvorrichtung (Verbindevorrichtung) vorgeschlagen, mit
- mindestens zwei Passformsegmenten, wobei mindestens eines der Passformsegmente relativ zu dem mindestens einen anderen Passformsegment beweglich gelagert ist, wobei die Passformsegmente derart ausgebildet sind, die Lenkvorrichtung, insbesondere den Lenkradkranz der Lenkvorrichtung, zumindest abschnittsweise umschließen zu können;
- einer Aufnahme zum Aufnehmen der Lenkvorrichtung;
- einem Antriebsmechanismus zum Verlagern des mindestens einen beweglich gelagerten Passformsegmentes auf die Lenkvorrichtung (und/oder auf die Aufnahme und/oder einen Freiraum zum Aufnehmen einer Lenkvorrichtung) zu;
- wobei die mindestens zwei Passformsegmente seitlich auf die Lenkvorrichtung zu oder von ihr weg beweglich sind; und
- mindestens ein Fixierelement, das ausgebildet ist, das mindestens eine Materialsegment vor einem Zusammenführen der Passformsegmente punktuell an der Lenkvorrichtung zu fixieren.

Mit solch einer Vorrichtung kann der Zeitaufwand des Verklebens gegenüber den üblichen Techniken deutlich reduziert werden. Die Vorrichtung kann beispielsweis den Vorteil eines gleichmäßigen Verklebens (bei gleichmäßiger Lederspannung und reduziertem Faltenwurf) bieten.

Die Vorrichtung kann teil- oder vollautomatisiert ausgebildet sein. Eine solche Vorrichtung kann den Vorteil bieten, dass das mindestens eine Materialsegment automatisiert um die Lenkvorrichtung gebogen und verklebt werden kann. Eine Teil- oder Vollautomatisierung kann einen gleichbleibenden Klebeprozess ermöglichen, bei dem die Fehlereinflüsse und -möglichkeiten gegenüber einem manuellen Klebeprozess verringert sind.

Als Materialsegment ist insbesondere ein flächiges Material, z.B. ein Materialstreifen, der einstückig oder mehrstückig ausgebildet sein kann, zu verstehen. Einstückig oder mehrstückig ausgebildet bedeutet beispielsweise, dass der Materialstreifen entweder aus mindestens zwei Einzelteilen zusammengefügt ist, also die mindestens zwei Einzelteile insbesondere miteinander vernäht oder verklebt sind, und/oder dass der Materialstreifen mehrschichtig aufgebaut ist. Mehrschichtig aufgebaut meint insbesondere aus mehreren Schichten eines Materials oder aus Schichten mehrerer Materialien aufgebaut.

Mehrschichtige Materialien können beispielsweise Verbundmaterialien, Funktionsmaterialien oder Funktionselemente sein. Dies können beispielsweise Funktionsmatten wie Heizmatten, Sensormatten (z.B. Hands-on-Detection (HOD)-Sensormatten), oder Softmatten sein. Das Materialsegment kann beispielsweise Leder, Kunstleder oder ein (Kunst)stoff sein.

Lenkvorrichtung meint insbesondere einen Lenkradrohling oder einen mit einem Kunststoff umschäumten oder ummantelten Lenkradrohling (Schäumling bzw. Schaumrohling). Als Lenkvorrichtung wird beispielsweise eine noch nicht mit Leder bespannte Lenkvorrichtung verstanden. Eine Lenkvorrichtung (Lenkhandhabe) kann jede Vorrichtung sein mit der ein Lenkwinkel vorgegeben wird, z.B. ein Lenkrad, ein Halblenkrad oder ein Joystick. Eine übliche Lenkvorrichtung umfasst einen Lenkradkranz, eine Lenkradnabe, die mit der Lenksäule koppelbar ist und mindestens eine Speiche, insbesondere zwei oder drei Speichen, die den Lenkradkranz mit der Lenkradnabe verbinden. Der Lenkradkranz weist insbesondere gekrümmte Flächen auf, damit er von der Hand des Fahrzeuginsassen bequem umgriffen werden kann.

Die mindestens zwei Passformsegmente können zu einer Passform für die Lenkvorrichtung zusammenfügbar sein. Die Vorrichtung weist mehrere (z.B. drei oder vier) seitliche Passformsegmente auf, die sich seitlich auf die Lenkvorrichtung zubewegen oder von ihr weg bewegen. Die Vorrichtung kann beispielsweise ein oder mehrere obere Passformsegmente aufweisen, die sich oben (von der Boden abgewandten Seite aus) auf die Lenkvorrichtung zubewegen oder von ihr weg bewegen. Die Vorrichtung kann beispielsweise ein oder mehrere untere Passformsegmente aufweisen, die sich unten (von der Boden zugewandten Seite aus) auf die Lenkvorrichtung zubewegen oder von ihr weg bewegen. Die Vorrichtung weist beispielsweise vier seitliche Passformsegmente, ein oberes Passformsegment und ein unteres Passformsegment auf.

Mindestens eines der Passformsegmente ist relativ zu dem mindestens einen anderen Passformsegment beweglich gelagert. Es können auch alle Passformsegmente relativ zueinander (aufeinander zu) beweglich gelagert sein.

Die Passformsegmente können derart ausgebildet sein, dass sie die Lenkvorrichtung, insbesondere den Lenkradkranz der Lenkvorrichtung zumindest abschnittsweise formschlüssig und/oder kraftschlüssig umschließen können.

Die Passformsegmente können zumindest teilweise gekrümmt verlaufen. Beispielsweise weisen die Passformsegmente auf der zu der Lenkvorrichtung zugewandten Seite (bzw. auf der zum Freiraum und/oder zur Aufnahme zum Aufnehmen einer Lenkvorrichtung zugewandten Seite) eine Krümmung auf, die es ermöglicht die Lenkvorrichtung (den gekrümmten Lenkradkranz der Lenkvorrichtung) zumindest teilweise zu umschließen. Die mindestens zwei Passformsegmente können in der Art ausgebildet sein, dass die mindestens zwei Passformsegmente zusammen mindestens 50%, mindestens 65%, mindestens 75%, mindestens 90%, mindestens 95% oder mindestens 99% vom Umfang des radialen Querschnitts des Lenkradkranzes umschließen können.

Als radialer Querschnitt wird ein Querschnitt durch den Lenkradkranz parallel oder annähernd parallel zur Lenkachse bzw. Lenksäule verstanden. Annähernd parallel bedeutet mit einer maximalen Abweichung von bis zu 45° zur Lenkachse bzw. Lenksäule.

Als umlaufender Querschnitt wird ein Querschnitt durch den Lenkradkranz senkrecht oder annähernd senkrecht zur Lenkachse bzw. Lenksäule verstanden bzw. ein horizontaler Querschnitt, der um die Lenkradnabe umlaufend verläuft. Annähernd senkrecht bedeutet mit einer maximalen Abweichung von bis zu 45° zur Senkrechten der Lenkachse bzw. Lenksäule.

Der radiale Querschnitt verläuft senkrecht zum umlaufenden Querschnitt. Der radiale Querschnitt ist kleiner als der umfängliche Querschnitt des Lenkradkranzes.

Die Passformsegmente können auswechselbar sein. Somit können die Passformsegmente an verschiedene Materialien (z.B. Leder oder Kunststoff), an verschiedene Funktionselemente bzw. Funktionsmaterialien oder an verschiedene Lenkvorrichtungen (z.B. Lenkradtypen oder Joysticks) angepasst werden. Das kann den Vorteil bieten, dass die Maschine variabler einsetzbar ist und an kundenspezifische Bedürfnisse angepasst werden kann. Die jeweiligen Passformsegmente können beispielsweise durch optische Vermessung der Lenkvorrichtung und dem Fachmann bekannten Fertigungstechniken von Bauteilen bspw. additive Fertigung, 3D-Druck, Laser-Sintern, Gießen, Fräsen etc. hergestellt worden sein.

Die Passformsegmente sind aus einem für die Vorrichtung geeignetem Material gebildet oder enthalten dieses zumindest. Die Passformsegmente können z.B. aus Metall (z.B. Aluminium, Titan), einer Legierung oder einem Stahl (z.B. Edelstahl) oder einem geeigneten Kunststoff (Silikon, hitze- und oder druckstabiler Kunststoff, Kunststoffschaum) oder einer geeigneten Keramik (hitze- und oder druckstabiler Keramik), gebildet sein oder enthalten diese zumindest. Die Passformsegmente können alternativ auch aus einem der zuvor genannten Materialien gebildet sein, welches auf der Oberfläche eine Schicht aus einem weicheren Material (mit geringerer Shore-Härte) als das zuvor genannte aufweist Die Passformsegmente können z.B. aus einem silikonbeschichteten Stahl bzw. silikonbeschichtetem Aluminium oder einem Material mit einer Beschichtung aus (3D-) gedrucktem Material (mit geringerer Shore-Härte) gebildet sein.

Die Vorrichtung kann eine Druckerzeugungseinheit zum Anlegen eines Druckes (bspw. 0,001 mbar bis 10 bar) an mindestens eines der Passformsegmente aufweisen. Die Druckerzeugungseinheit zum Anlegen eines Druckes kann eine Überdruckerzeugungseinheit zum Anlegen eines Überdruckes (bspw. 1,1 bar bis 10 bar) sein, so dass die Pressformsegmente mit einem Druck zwischen 1,1 bar bis 10 bar an die Lenkvorrichtung gepresst werden. Die Druckerzeugungseinheit zum Anlegen eines Druckes kann alternativ eine Unterdruckerzeugungseinheit zum Anlegen eines Unterdruckes (bspw. 0,001 mbar bis 1 bar) sein, so dass die Pressformsegmente auf die Lenkvorrichtung einen Unterdruck ausüben, so dass die Pressformsegmente an die Lenkvorrichtung angesaugt werden.

Die Vorrichtung kann mindestens ein beheizbares Passformsegment aufweisen und mindestens eine Heizeinheit, die mit dem mindestens einem beheizbaren Passformsegment in Verbindung steht. Die Passformsegmente können beispielsweise mit einer Temperatur in einem Bereich von 21 bis 200°, insbesondere 75°C bis 125°C oder 50°C bis 95°C, beheizt werden. Die Vorrichtung kann alternativ auch nicht beheizte Passformsegmente aufweisen.

Die Vorrichtung kann mindestens einen Temperatursensor aufweisen. Der mindestens eine Temperatursensor kann beispielsweise an dem mindestens einen beheizbaren Passformsegment angeordnet sein.

Die Vorrichtung kann mindestens ein kühlbares Passformsegment aufweisen und mindestens eine Kühleinheit, die mit dem mindestens einem kühlbaren Passformsegment in Verbindung steht. Die Passformsegmente können beispielsweise mit einer Temperatur in einem Bereich von -30°C bis 21° gekühlt werden. Die Kühlung kann z.B. eine Wasserkühlung sein.

Die Vorrichtung weist einen Innenraum auf. Die Vorrichtung kann ein Gehäuse aufweisen, das den Innenraum umgibt bzw. das außerhalb des Innenraums angeordnet sein kann. Die Vorrichtung kann ein Gehäuse aufweisen, das einen Innenraum mit den mindestens zwei Passformsegmente und/oder der Aufnahme und/oder dem mindestens einen Antriebsmechanismus, umgibt. Die Passformsegmente können auch zumindest teilweise außerhalb des Gehäuses angeordnet sein und in das Gehäuse verfahrbar sein.

Die Vorrichtung weist eine Aufnahme zum Aufnehmen einer Lenkvorrichtung, insbesondere eines Lenkrades, auf. Die Aufnahme ist insbesondere im Innenraum des Gehäuses angeordnet. Die Aufnahme weist insbesondere einen Freiraum zum Aufnehmen einer Lenkvorrichtung auf. Die Aufnahme kann beispielsweise durch ein Gehäuse gebildet sein.

Der Freiraum und/ oder die Aufnahme zum Aufnehmen einer Lenkvorrichtung ist in Ihrer Form entsprechend der Form der Lenkvorrichtung, insbesondere kreisförmig oder oval, ausgebildet.

Die Aufnahme kann eine Haltevorrichtung zum Aufnehmen einer Lenkvorrichtung aufweisen. Die Lenkvorrichtung kann bspw. auf der Haltevorrichtung lösbar montiert werden.

Die Vorrichtung weist mindestens ein Fixierelement zum Fixieren des mindestens einen Materialsegmentes an der Lenkvorrichtung auf. Beispielsweise kann die Vorrichtung zwei, drei, vier oder mehr als vier Fixierelemente aufweisen. Das mindestens eine Fixierelement ist ausgebildet, die Lenkvorrichtung punktuell zu fixieren, so können die Fixierelemente z.B. mit einer Spitze oder stumpfen Spitze ausgestattet sein. Das mindestens eine Fixierelement kann auch so ausgebildet sein, die Lenkvorrichtung gleichzeitig an mehreren Stellen zu fixieren, bspw. ist das Fixierelement passformgenau zu der Lenkvorrichtung ausgebildet.

In einer Ausgestaltung können die mindestens zwei Passformsegmente und das mindestens eine Fixierelement zu einer Passform für die Lenkvorrichtung zusammenfügbar sein. Dafür können die Passformsegmente Aussparungen für die Fixierelemente aufweisen. Die Vorrichtung kann beispielsweise vier seitliche Passformsegmente, ein oberes Passformsegmente und ein unteres Passformsegment sowie zwei, drei oder vier Fixierelemente aufweisen, die zu einer Passform für die Lenkvorrichtung zusammenfügbar sind.

Der Antriebsmechanismus zum Zusammenführen der mindestens zwei Passformsegmente, kann mindestens eine Schub- und Zugeinheit und/ oder mindestens eine Hub- und Senkeinheit aufweisen, die mit mindestens einem Passformsegment verbunden ist. Die mindestens eine Hubeinheit kann dabei mit dem mindestens einen oberen Passformsegment in Verbindung stehen. Die mindestens eine Senkeinheit kann dabei mit dem mindestens einen unteren Passformsegment in Verbindung stehen. Die mindestens eine Schub- und Zugeinheit kann dabei mit dem mindestens einen seitlichen Passformsegment in Verbindung stehen.

Die Vorrichtung weist mindestens einen Antriebsmechanismus auf. Der Antriebsmechanismus kann mindestens einen motorischen, hydraulischen und/oder pneumatischen Antrieb umfassen. Der Antriebsmechanismus kann jedoch auch mindestens einen Hand- oder Fußantrieb umfassen. Der Antriebsmechanismus kann die Passformsegmente und/oder die Fixierelement auf die Lenkvorrichtung zu oder von der Lenkvorrichtung weg bewegen. Dabei kann z.B. erst das mindestens eine Fixierelement auf die Lenkvorrichtung zubewegt werden und anschließend das mindestens eine Passformsegment auf die Lenkvorrichtung zubewegt werden. Es können auch mehrere Fixierelemente gleichzeitig oder nacheinander auf die Lenkvorrichtung zubewegt werden. Anschließend können mehrere Passformsegmente gleichzeitig oder nacheinander auf die Lenkvorrichtung zubewegt werden. Nach dem Klebeprozess kann das mindestens eine Fixierelement und/oder das mindestens eine Passformsegment gleichzeitig oder nacheinander von der Lenkvorrichtung wegbewegt werden. Der Antriebsmechanismus kann z.B. mindestens einen pneumatischen oder hydraulischen Zylinder aufweisen, der mit mindestens einem Passformsegment in Wirkverbindung steht. Auch kann jedes der Passformsegmente jeweils einen pneumatischen oder hydraulischen Zylinder aufweisen.

Die Vorrichtung kann zudem mindestens eine Steuereinheit zum Ansteuern des mindestens einen Antriebsmechanismus, der mindestens einen Druckerzeugungseinheit, Heizeinheit oder Kühleinheit aufweisen.

Es wird zudem Verfahren zum stoffschlüssigen Verbinden von mindestens einem Materialsegment mit einer Lenkvorrichtung beschrieben, insbesondere mittels einer erfindungsgemäßen Vorrichtung, umfassend folgende Verfahrensschritte:
i) in Kontakt bringen mindestens eines Abschnitts der Lenkvorrichtung mit mindestens einem Materialsegment, wobei entweder das mindestens eine Materialsegment auf der zur Lenkvorrichtung zugewandten Seite und/oder die Lenkvorrichtung (insbesondere der Lenkradkranz der Lenkvorrichtung) auf der zum Materialsegment zugewandten Seite mindestens ein Haftmittel aufweist (oder mit einem Haftmittel in Kontakt steht), oder auf die der Lenkvorrichtung (insbesondere des Lenkradkranzes der Lenkvorrichtung) zugewandten Seite des mindestens einen Materialsegments und/oder auf die dem Materialsegment zugewandten Seite der Lenkvorrichtung ein Haftmittel aufgebracht wird; und anschließend
ii) Zusammenführen von mindestens zwei Passformsegmenten mit Hilfe eines Antriebsmechanismus, in der Art, dass die Passformsegmente die Lenkvorrichtung (insbesondere den Lenkradkranz der Lenkvorrichtung) zumindest abschnittsweise umschließen und dass das zwischen der Lenkvorrichtung (insbesondere dem Lenkradkranz der Lenkvorrichtung) und den Passformsegmenten angeordnete mindestens eine Materialsegment gegen die Lenkvorrichtung gedrückt wird, wobei die mindestens zwei Passformsegmente seitlich auf die Lenkvorrichtung zu oder von ihr weg bewegt werden, und wobei das mindestens eine Materialsegment vor dem Zusammenführen der Passformsegmente punktuell an der Lenkvorrichtung durch ein Fixierelement fixiert wird.

Mit solch einem Verfahren kann der Zeitaufwand des Verklebens gegenüber den üblichen manuellen Techniken deutlich reduziert werden. Das Verfahren kann beispielsweise den Vorteil eines gleichmäßigen Verklebens (bei gleichmäßiger Lederspannung und reduziertem Faltenwurf) bieten.

Die in dem Verfahren verwendete Vorrichtung kann teil- oder vollautomatisiert ausgebildet sein. Dies kann beispielsweise den Vorteil bieten, dass das mindestens eine Materialsegment automatisiert um die Lenkvorrichtung gebogen und verklebt werden kann, wodurch eine Zeitersparnis ermöglicht wird. Eine Teil- oder Vollautomatisierung ermöglicht einen gleichbleibenden Klebeprozess, bei dem die Fehlereinflüsse und -möglichkeiten gegenüber einem manuellen Klebeprozess verringert sind.

Das Materialsegment weist eine Innenseite auf, welche der Lenkvorrichtung zugewandt ist und eine Außenseite, die der Lenkvorrichtung abgewandt ist. Die Lenkvorrichtung weist eine Außenseite auf, die der Innenseite des Materialsegments zugewandt ist. Das Haftmittel wird also auf die Innenseite des Materialsegments, auf die Außenseite der Lenkvorrichtung, insbesondere des Lenkradkranzes und/oder in den Zwischenraum zwischen der Innenseite des Materialsegments und der Außenseite der Lenkvorrichtung, insbesondere des Lenkradkranzes, aufgebracht.

Das mindestens eine Materialsegment kann insbesondere Leder oder Kunstleder umfassen oder aus solchem bestehen. Alternativ kann das mindestens eine Materialsegment ein Funktionselement, insbesondere eine Heizmatte, eine Sensormatte (z.B. HOD-Sensormatte) oder eine Softmatte, umfassen oder ein solches sein. Das mindestens eine Materialsegment kann z.B. aus miteinander vernähten Einzelsegmenten bestehen.

Als Haftmittel wird insbesondere ein Klebemittel (z.B. eine Klebstoff, insbesondere ein thermisch aktivierbarer Klebstoff, ein Dispersions- oder Pulverklebstoff oder Sprühklebstoff), ein Haftvermittler (z.B. ein Klebestreifen oder Klebstoffnetz) oder ein Adhäsionsmittel verstanden. Das Verfahren kann bspw. einen Schritt des Nasskaschierens (Kleben mittels nassem Klebstoff), Trockenkaschierens (Kleben mittels trockenem Klebstoff) oder Thermokaschierens (Verbinden mittels Wärme und/oder Druck) aufweisen.

In Kontakt bringen mindestens eines Abschnitts der Lenkvorrichtung mit mindestens einem Materialsegment, wobei das mindestens eine Materialsegment auf der zu der Lenkvorrichtung zugewandten Seite und/oder die Lenkvorrichtung auf der zu dem Materialsegment zugewandten Seite mindestens ein Haftmittel aufweist, bedeutet, dass das Materialsegment bereits eine Oberfläche mit einem Haftmittel aufweist bevor es mit der Lenkvorrichtung in Kontakt gebracht wird. Ein Materialsegment mit einer Haftmitteloberseite (z.B. eine Klebefolie) kann kommerziell erworben sein. Ein Materialsegment, das bereits ein Haftmittel aufweist, bevor es mit der Lenkvorrichtung in Kontakt gebracht wird, kann auch durch einen sich dem Verfahrensschritt i) vorangehenden Verfahrensschritt x) des Aufbringens eines Haftmittels auf eine Seite des Materialsegments entstanden sein.

In Schritt i) bedeutet auf die der Lenkvorrichtung zugewandten Seite des mindestens einen Materialsegments und/oder auf die dem Materialsegment zugewandten Seite der Lenkvorrichtung ein Haftmittel aufbringen, dass das Materialsegment (noch ohne Haftmittel) um die Lenkvorrichtung herum angeordnet ist und das Haftmittel entweder auf die Innenseite des Materialsegments und/ oder auf die Außenseite der Lenkvorrichtung und/oder zwischen die Lenkvorrichtung und das Materialsegment aufgebracht (z.B. aufgesprüht, mittels Pinsel aufgetragen oder als Klebestreifen eingelegt) wird.

Dabei kann das Haftmittel mit einer Klebemenge von 5 g/m² bis 150 g/m², insbesondere 30 g/m² bis 100 g/m² auf das jeweilige Materialsegment aufgebracht (worden) sein.

Zwischen den Verfahrensschritten i) und ii) kann das mindestens eine Materialsegment auf der Lenkvorrichtung ausgerichtet und/oder mittels mindestens eines Fixierelements fixiert werden. Beispielsweise kann das Materialsegment in den Nuten (Vertiefungen) der Lenkvorrichtung fixiert werden. Dies kann beispielsweise den Vorteil haben, ein Verrutschen des Materialsegments zu verhindern bzw. zu vermindern und der Bildung einer Materialwulst im Nutbereich entgegenzuwirken. Das mindestens eine Materialsegment kann auch an den Nähten des Materialsegments (falls vorhanden) fixiert werden. Dies kann beispielsweise den Vorteil haben, dass mögliche Abdrücke, die ein Fixierelement hinterlassen könnte, nicht sichtbar wären.

Das Aufbringen des Haftmittels auf die der Lenkvorrichtung zugewandten Seite des mindestens einen Materialsegments und/oder auf die dem Materialsegment zugewandten Seite der Lenkvorrichtung in Schritt i) oder x) kann maschinell erfolgen. Das Aufbringen des Haftmittels kann maschinell in der gleichen Vorrichtung oder in einer separaten Vorrichtung erfolgen.

Zwischen den Verfahrensschritten i) und ii) oder nach dem Verfahrensschritt ii) kann ein Vernähen des mindestens eines Materialsegmentes mit sich selbst erfolgen. Das Materialsegment wird insbesondere in der Art mit sich selbst vernäht, dass das mindestens eine Materialsegment den Umfang des radialen Querschnitts des Lenkradkranzes umschließt, das Materialsegment wird also um das Lenkrad herum vernäht.

Beispielsweise erfolgt nach dem Verfahrensschritt i) ein Anordnen des Materialsegmentes an der Lenkvorrichtung, anschließend wird das Materialsegment mit sich selbst derart vernäht, dass es die Lenkvorrichtung im radialen Querschnitt betrachtet zumindest näherungsweise vollständig umschließt, und es wird dann der Verfahrensschritt ii) durchgeführt. Dass das Vernähen bereits vor dem Zusammenführen der Passformsegmente (vor Schritt ii) erfolgt) kann beispielsweise den Vorteil haben, dass das Materialsegment leichter positioniert und/oder fixiert werden kann, insbesondere wenn ein Klebemittel verwendet wird, was nicht sofort klebt, sondern noch ein Verschieben des Materialsegmentes ermöglicht, bevor sich der Klebstoff fest (stoffschlüssig) mit der Lenkvorrichtung verbunden hat.

Bevor die Passformsegmente zusammengeführt werden, wird die Lenkvorrichtung bspw. in den für die Lenkvorrichtung vorgesehenen Freiraum im Innenraum der Vorrichtung verbracht und mit einer Haltevorrichtung lösbar verbunden.

Die Passformsegmente drücken dann anschließend in Schritt ii) gegen die Lenkvorrichtung, so dass sich das zwischen Passformsegment und Lenkvorrichtung befindliche Haftmittel stoffschlüssig mit der Lenkvorrichtung, insbesondere dem Lenkradkranz der Lenkvorrichtung, verbindet. Die Passformsegmente können die Lenkvorrichtung formschlüssig und/oder kraftschlüssig umschließen, damit eine besonders gleichmäßige stoffschlüssige Verbindung von Materialsegment, Haftmittel und Lenkvorrichtung erfolgt. Das Materialsegment, z.B. das Leder, wird dabei entsprechend der Krümmung des Lenkrades umgebogen.

Dabei können die Passformsegmente gleichzeitig oder nacheinander auf die Lenkvorrichtung zu bewegt bzw. an die Lenkvorrichtung (insbesondere den Lenkradkranz der Lenkvorrichtung) angedrückt werden. So können beispielsweise erst die seitlichen Passformsegmente und anschließend das obere und/oder untere Passformsegment auf die Lenkradvorrichtung zu bewegt werden.

Die Passformsegmente können die Lenkvorrichtung, insbesondere den Lenkkranz der Lenkvorrichtung, zumindest teilweise oder vollständig zu umschließen. Die Passformsegmente können zusammen mindestens 50%, mindestens 65%, mindestens 75%, mindestens 90%, mindestens 95% oder mindestens 99% vom Umfang des radialen Querschnitts des Lenkradkranzes umschließen. Dadurch wird ein gleichmäßiges stoffschlüssiges verkleben erzielt.

Durch beheizte Passformsegmente lässt sich beispielsweise ein thermisch aktivierbares Haftmittel thermisch aktivieren, so dass eine stoffschlüssige Verbindung zwischen dem mindestens einen Materialsegment und der Lenkvorrichtung ausgebildet wird. Durch beheizte Passformsegmente lassen sich beispielsweise auch andere Haftmittel leichter Verteilen, um eine bessere stoffschlüssige Verbindung zwischen dem mindestens einen Materialsegment und der Lenkvorrichtung zu erzielen.

In dem Verfahren kann gleichzeitig zu Schritt ii) der mindestens eine Abschnitt der Lenkvorrichtung durch mindestens ein beheiztes Passformsegment erhitzt werden. Dabei kann der mindestens eine Abschnitt der Lenkvorrichtung in einem Temperaturbereich von 21 °C bis 200 °C, insbesondere 75°C bis 125°C oder 50°C bis 95°C, erhitzt werden. Alternativ kann anschließend an Schritt ii) der mindestens eine Abschnitt der Lenkvorrichtung durch mindestens ein beheiztes Passformsegment in einem Temperaturbereich von 21 °C bis 200°C, insbesondere 75°C bis 125°C oder 50°C bis 95°C, erhitzt werden.

In dem Verfahren kann nach Schritt ii) der mindestens eine Abschnitt der Lenkvorrichtung durch mindestens ein gekühltes Passformsegment abgekühlt werden. Durch ein Abkühlen der Passformsegmente nach dem stoffschlüssigen Verbinden (Klebevorgang) lässt sich das Haftmittel bspw. schneller aushärten, was eine verkürzte Prozessdauer bedeutet. Durch das Abkühlen können die Passformsegmente schneller von der Lenkvorrichtung entfernt werden, ohne das Materialsegment wieder von der Lenkvorrichtung abzuziehen.

Das mindestens eine der Passformsegmente kann mit einem Druck von 1 bar bis 300 bar, insbesondere 1 bar bis 50 bar oder 1 bar bis 6 bar an den mindestens einen Abschnitt der Lenkvorrichtung angedrückt werden.

Die Zeit zum Andrücken des mindestens einen Passformsegments an den mindestens einen Abschnitt der Lenkvorrichtung kann bspw. 1 Sekunde bis 60 Minuten, insbesondere 10 Sekunden bis 5 Minuten, betragen.

Beispielsweise umfasst das Verfahren in einer ersten Ausgestaltungsvariante folgende Schritte:
a) in Kontakt bringen mindestens eines Abschnitts der Lenkvorrichtung mit mindestens einem Materialsegment; und anschließend
b) Aufbringen eines Haftmittels auf die der Lenkvorrichtung (insbesondere des Lenkradkranzes der Lenkvorrichtung) zugewandten Seite des mindestens einen Materialsegments und/oder auf die dem Materialsegment zugewandten Seite der Lenkvorrichtung; und anschließend
c) optionales Vernähen des mindestens einen Materialsegmentes mit sich selbst; und anschließend
d) Einbringen der Lenkvorrichtung in die Verbindevorrichtung; und anschließend
e) Zusammenführen von mindestens zwei Passformsegmenten mit Hilfe eines Antriebsmechanismus, in der Art, dass die Passformsegmente die Lenkvorrichtung (insbesondere den Lenkradkranz der Lenkvorrichtung) zumindest abschnittsweise umschließen und dass das zwischen der Lenkvorrichtung (insbesondere dem Lenkradkranz der Lenkvorrichtung) und den Passformsegmenten angeordnete mindestens eine Materialsegment gegen die Lenkvorrichtung gedrückt wird.

Beispielsweise umfasst das Verfahren in einer zweiten Ausgestaltungsvariante folgende Schritte:
a) in Kontakt bringen mindestens eines Abschnitts der Lenkvorrichtung mit mindestens einem Materialsegment; und anschließend
b) Aufbringen eines Haftmittels auf die der Lenkvorrichtung (insbesondere des Lenkradkranzes der Lenkvorrichtung) zugewandten Seite des mindestens einen Materialsegments und/oder auf die dem Materialsegment zugewandten Seite der Lenkvorrichtung; und anschließend
d) Einbringen der Lenkvorrichtung in die Verbindevorrichtung; und anschließend
e) Zusammenführen von mindestens zwei Passformsegmenten mit Hilfe eines Antriebsmechanismus, in der Art, dass die Passformsegmente die Lenkvorrichtung (insbesondere den Lenkradkranz der Lenkvorrichtung) zumindest abschnittsweise umschließen und dass das zwischen der Lenkvorrichtung (insbesondere dem Lenkradkranz der Lenkvorrichtung) und den Passformsegmenten angeordnete mindestens eine Materialsegment gegen die Lenkvorrichtung gedrückt wird; und anschließend c) optionales Vernähen des mindestens einen Materialsegmentes mit sich selbst.

Beispielsweise umfasst das Verfahren in einer dritten Ausgestaltungsvariante folgende Schritte:
b) Aufbringen eines Haftmittels auf die der Lenkvorrichtung (insbesondere des Lenkradkranzes der Lenkvorrichtung) zugewandten Seite des mindestens einen Materialsegments und/oder auf die dem Materialsegment zugewandten Seite der Lenkvorrichtung; und anschließend
a) in Kontakt bringen mindestens eines Abschnitts der Lenkvorrichtung mit mindestens einem Materialsegment; und anschließend
d) Einbringen der Lenkvorrichtung in die Verbindevorrichtung; und anschließend
e) Zusammenführen von mindestens zwei Passformsegmenten mit Hilfe eines Antriebsmechanismus, in der Art, dass die Passformsegmente die Lenkvorrichtung (insbesondere den Lenkradkranz der Lenkvorrichtung) zumindest abschnittsweise umschließen und dass das zwischen der Lenkvorrichtung (insbesondere dem Lenkradkranz der Lenkvorrichtung) und den Passformsegmenten angeordnete mindestens eine Materialsegment gegen die Lenkvorrichtung gedrückt wird; und anschließend c) optionales Vernähen des mindestens einen Materialsegmentes mit sich selbst.

Beispielsweise umfasst das Verfahren in einer vierten Ausgestaltungsvariante folgende Schritte:
b) Aufbringen eines Haftmittels auf die der Lenkvorrichtung (insbesondere des Lenkradkranzes der Lenkvorrichtung) zugewandten Seite des mindestens einen Materialsegments und/oder auf die dem Materialsegment zugewandten Seite der Lenkvorrichtung; und anschließend
a) in Kontakt bringen mindestens eines Abschnitts der Lenkvorrichtung mit mindestens einem Materialsegment; und anschließend
c) optionales Vernähen des mindestens einen Materialsegmentes mit sich selbst, und anschließend
d) Einbringen der Lenkvorrichtung in die Verbindevorrichtung; und anschließend
e) Zusammenführen von mindestens zwei Passformsegmenten mit Hilfe eines Antriebsmechanismus, in der Art, dass die Passformsegmente die Lenkvorrichtung (insbesondere den Lenkradkranz der Lenkvorrichtung) zumindest abschnittsweise umschließen und dass das zwischen der Lenkvorrichtung (insbesondere dem Lenkradkranz der Lenkvorrichtung) und den Passformsegmenten angeordnete mindestens eine Materialsegment gegen die Lenkvorrichtung gedrückt wird.

Es wird beispielswiese die Verwendung der erfindungsgemäßen Vorrichtung bzw. die Verwendung des erfindungsgemäßen Verfahrens zum Verkleben mindestens eines Ledersegmentes oder mindestens eines Funktionselementes mit einer Lenkvorrichtung, insbesondere einem Lenkradkranz einer Lenkvorrichtung, beschrieben.

Die Erfindung wird im Folgenden anhand von Ausführungsbeispielen unter Bezugnahme auf die Figuren näher erläutert. Es zeigen:
- Fig. 1A: eine Ansicht einer Bauteilgruppe einer Verbindevorrichtung gemäß einem Ausführungsbeispiel der Erfindung,
- Fig. 1B: eine Ansicht einer anderen Bauteilgruppe der Verbindevorrichtung mit einer Druckerzeugungseinheit,
- Fig. 2: eine Detailansicht eines Ausschnittes der Baugruppe aus Fig. 1A,
- Fig. 3: eine Explosionszeichnung der Lenkvorrichtung mit Passformsegmenten,
- Fig. 4: eine schematische Darstellung verschiedener Verfahren zum stoffschlüssigen Verbinden von mindestens einem Materialsegment mit einer Lenkvorrichtung.

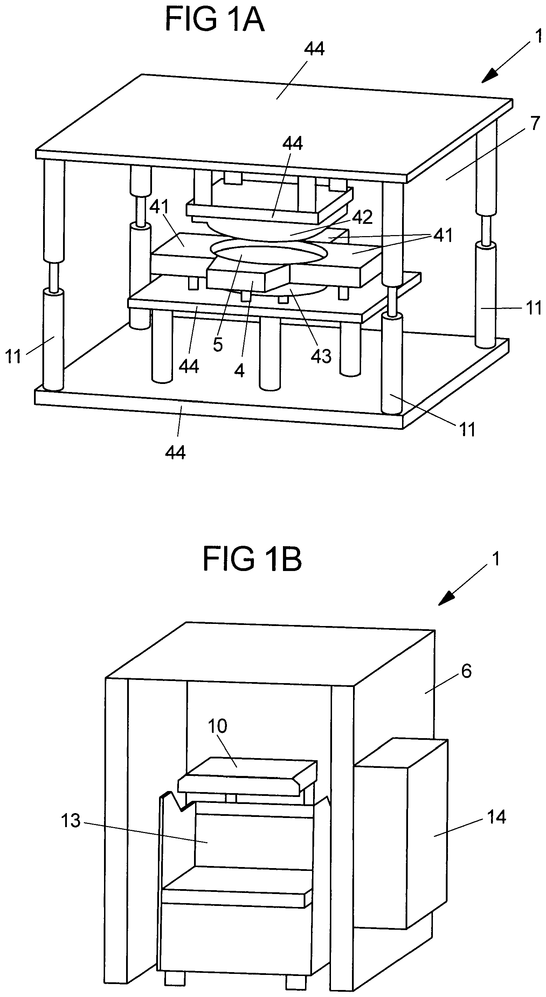

Die Bauteilgruppen aus Fig. 1A und Fig. 1B bilden zusammen eine Vorrichtung 1 zum stoffschlüssigen Verbinden (Verbindevorrichtung) von mindestens einem Materialsegment, insbesondere Leder oder einer Funktionsmatte, mit einer Lenkvorrichtung (nicht dargestellt), insbesondere einem Lenkradkranz der Lenkvorrichtung. Die Verbindevorrichtung 1 weist einen Innenraum 7 auf und eine sich darin befindende Aufnahme 5 zum Aufnehmen der Lenkvorrichtung. Die Aufnahme kann eine kreisförmige Form haben, die einer Passform des einzulegenden Lenkrades entspricht. Die Verbindevorrichtung 1 umfasst mehrere Passformsegmente 4, die relativ zueinander beweglich gelagert sind. Die Passformsegmente 4 sind derart ausgebildet, dass sie die Lenkvorrichtung, insbesondere den Lenkradkranz der Lenkvorrichtung, zumindest abschnittsweise umschließen können. Die mehreren Passformsegmente 4 können bspw. ein oberes Passformsegment 42, ein unteres Passformsegment 43 und mehrere seitliche Passformsegmente 41 umfassen. Das obere Passformsegment 42 kann in den Freiraum 12 für die Lenkvorrichtung 3 einbringbar, z.B. absenkbar oder klappbar, sein. Außerdem hat die Verbindevorrichtung 1 einen Antriebsmechanismus zum Verlagern der beweglich gelagerten Passformsegmente 4 die Lenkvorrichtung 3 (bzw. Innenraum 7 und/oder den Freiraum 12) zu.

Die Passformsegmente können an einem Passformsegmentträger 44 angeordnet sein. Die Bauteilgruppe der Verbindevorrichtung in Fig. 1B weist ein Gehäuse 6 und eine Druckerzeugungseinheit 10 auf, in deren Zwischenraum 13 die Bauteilgruppe aus Fig.1A eingebracht werden kann. Die Druckerzeugungseinheit 10 kann beispielsweise über eine Steuereinheit 14 angesteuert werden, um die Passformsegmentträger 44 in Richtung der Lenkvorrichtung 3 bzw. des Freiraums 12 bzw. der Aufnahme 5 zum Aufnehmen der Lenkvorrichtung 3 zu bewegen. Die Zylinder 11 können dabei Führungszylinder oder pneumatische Zylinder darstellen.

Die Passformsegmentträger 44 können dabei geschwenkt oder abgesenkt bzw. angehoben werden, so dass bspw. ein oberes Passformsegment 41 auf die Lenkvorrichtung 1 zu bewegt wird. In dem Fall dass die Passformsegmentträger 44 schwenkbar ausgestaltet sind, können die Führungszylinder z.B. aus zwei Führungsteilen aufgebaut sein, die im Betrieb miteinander in Anlage kommen können oder ineinander greifen können, bspw. um einen vorgegebenen Abstand zwischen den Passformsegmentträgern 44 nicht zu unterschreiten. Beispielsweise wäre auch denkbar dass die Passformsegmentträger 44 mit pneumatischen oder hydraulischen Zylindern miteinander verbunden sind, die durch Anlegen eines Druckes zusammengefahren werden können, wodurch sich das obere Passformsegment 42 in den Freiraum 12 für die Lenkvorrichtung bewegen lässt und gegen die Lenkvorrichtung drückt.

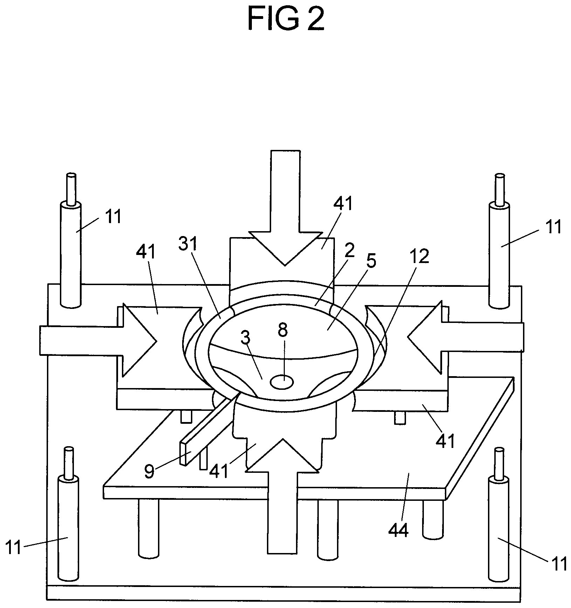

In Fig. 2 ist eine Ansicht einer anderen Ausgestaltungsvariante der Verbindevorrichtung mit (mindestens) einem Fixierelement dargestellt. Die Lenkvorrichtung kann in den für sie vorgesehenen Freiraum 12 innerhalb der Aufnahme 5 der Verbindevorrichtung eingebracht und auf einer Haltevorrichtung 8 angeordnet sein. Das (mindestens eine) Fixierelement 9, kann das mindestens eine Materialsegment 2 an dem Lenkradkranz 31 der Lenkvorrichtung 3 fixieren, indem es den Lenkradkranz 31 zumindest teilweise (insbesondere formschlüssig) umschließt oder indem es das mindestens eine Materialsegment 2 an dem Lenkradkranz 31 bzw. den Speichen der Lenkvorrichtung punktuell fixiert. Die Verbindevorrichtung 1 umfasst vier seitliche Passformsegmente 41, die relativ zueinander beweglich gelagert sind und über einen Antriebsmechanismus auf die Lenkvorrichtung 3 zu bewegt werden können. Die Passformsegmente umschließen die Lenkvorrichtung 3 zumindest abschnittsweise so, dass das zwischen der Lenkvorrichtung 3 und den Passformsegmenten 4 angeordnete mindestens ein Materialsegment 2 gegen die Lenkvorrichtung 3 gedrückt wird. Die Passformsegmente 4 und das (mindestens eine) Fixierelement 9 sind zu einer Passform für die Lenkvorrichtung 3 zusammenfügbar, wobei die Passformsegmente 4 Aussparungen für das (mindestens eine) Fixierelement 9 aufweisen.

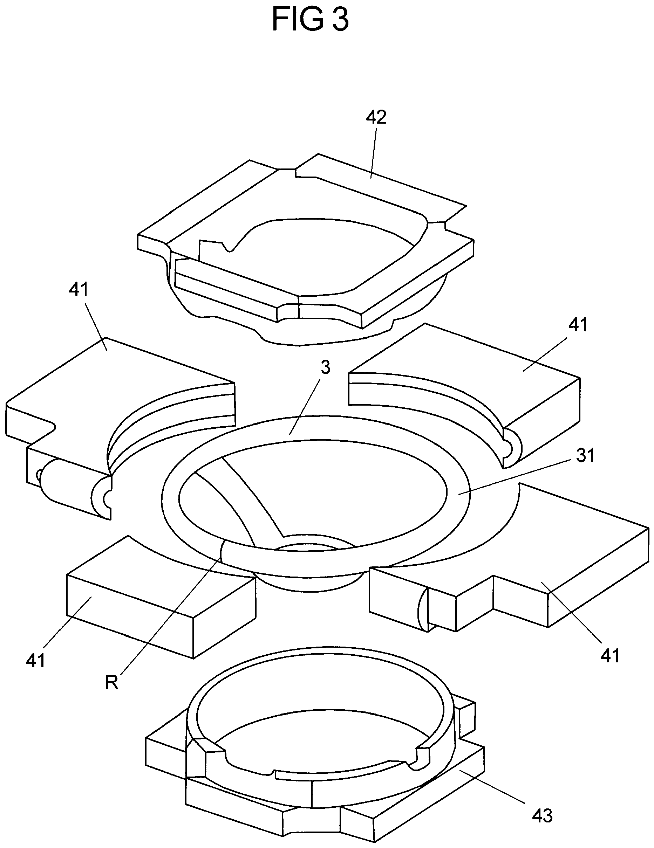

Fig. 3 zeigt eine Explosionszeichnung der Lenkvorrichtung 3 mit mehreren Passformsegmenten 4, die zu einer Passform für die Lenkvorrichtung 3 zusammenfügbar sind. Die Passformsegmente 4 können das mindestens eine auf den Lenkradkranz 31 der Lenkvorrichtung aufgebrachte Materialsegment 2 beispielsweise formschlüssig und/oder kraftschlüssig umschließen. Die mehreren Passformsegmente 4 können insbesondere vier seitliche, gekrümmt verlaufende (der Krümmung des Lenkradkranzes angepasste) Passformsegmente 41, ein oberes Passformsegment 42 und ein unteres Passformsegment 43 umfassen. Die Passformsegmente 4 weisen auf der zur Lenkvorrichtung gerichteten Seite hin eine Krümmung auf. Hierbei sind die seitlichen Passformsegmente 41 einerseits zu den äußeren Bereichen des Lenkradkranzes hin konkav gekrümmt, um die äußeren Bereiche des Lenkradkranzes 31 umschließen zu können und andererseits entsprechend dem um die Lenkradnabe umlaufenden Querschnitt des Lenkradkranzes gekrümmt. Das obere Passformsegment 42 bzw. das untere Passformsegment 43 sind konvex gekrümmt, um die inneren Bereiche des Lenkradkranzes 31 umschließen zu können.

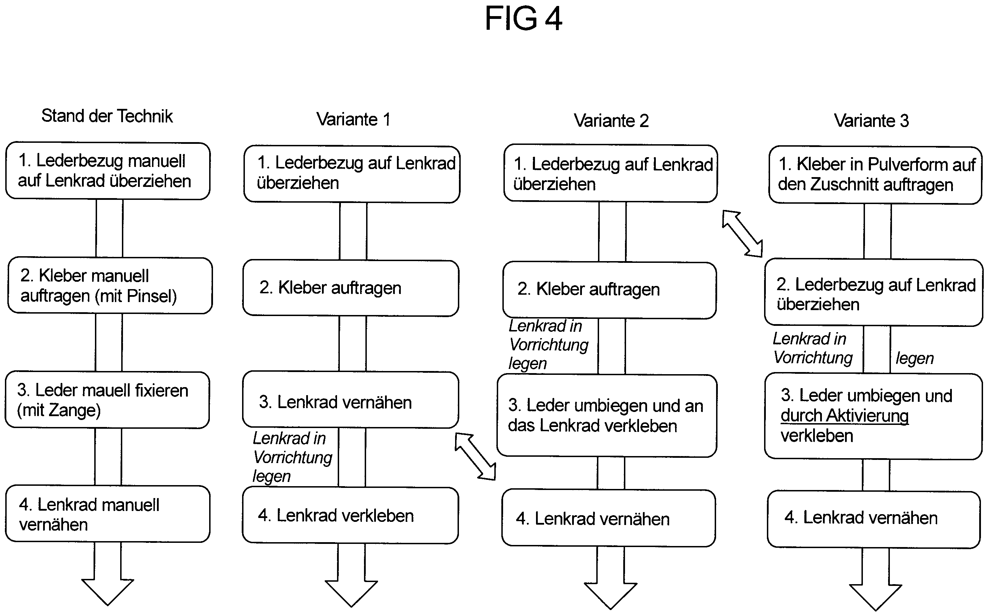

Fig. 4 zeigt eine schematische Darstellung verschiedener Ausführungsvarianten eines Verfahrens zum stoffschlüssigen Verbinden von mindestens einem Materialsegment, insbesondere ein Ledersegment, mit einer Lenkvorrichtung, insbesondere dem Lenkradkranz der Lenkvorrichtung. Die Verfahren umfassen dabei folgende Schritte:
a) in Kontakt bringen eines Ledersegments mit dem Lenkradkranz einer Lenkvorrichtung;
b) Aufbringen eines Haftmittels auf die Seite des Ledersegments, die dem Lenkradkranz zugewandt ist und/oder auf die Seite des Lenkrades, die dem Ledersegment zugewandten;
d) Einbringen der Lenkvorrichtung in die Verbindevorrichtung,
c) Vernähen des Ledersegments mit sich selbst,
e) Zusammenführen von mindestens zwei Passformsegmenten mit Hilfe eines Antriebsmechanismus, in der Art, dass die Passformsegmente den Lenkradkranz der Lenkvorrichtung zumindest abschnittsweise umschließen und dass das zwischen dem Lenkradkranz der Lenkvorrichtung und den Passformsegmenten angeordnete mindestens eine Ledersegment gegen die Lenkvorrichtung gedrückt wird.

Eine Ausgestaltungsvariante enthält die oben genannten Verfahrensschritte in folgender Reihenfolge a, b, c, d, e, wohingegen einen andere Ausgestaltungsvariante die oben genannten Verfahrensschritte in folgender Reihenfolge enthält a, b, d, e, c. Noch eine andere Ausgestaltungsvariant die oben genannten Verfahrensschritte in folgender Reihenfolge b, a, d, e , c.

Im Vergleich ist ein typisches Verfahren des Standes der Technik dargestellt, bei dem der Lederbezug manuell auf das Lenkrad aufgezogen, der Kleber manuell mit einem Pinsel auf das Ledersegment auftragen, das Leder manuell mit einer Zange auf der Lenkvorrichtung umgebogen und fixiert wird und anschließend manuell um das Lenkrad herum vernäht wird.

### Bezugszeichenliste

- 1: Vorrichtung
- 2: Materialsegment
- 3: Lenkvorrichtung
- 31: Lenkradkranz
- 4: Passformsegment
- 41: seitliches Passformsegment
- 42: oberes Passformsegment
- 43: unteres Passformsegment
- 44: Passformsegmentträger
- 5: Aufnahme
- 6: Gehäuse
- 7: Innenraum
- 8: Haltevorrichtung
- 9: Fixierelement
- 10: Druckerzeugungseinheit
- 11: Zylinder
- 12: Freiraum
- 13: Zwischenraum
- 14: Steuereinheit
- R: radialer Querschnitt

## Patentansprüche

1. Vorrichtung (1) zum stoffschlüssigen Verbinden von mindestens einem Materialsegment (2) mit einer Lenkvorrichtung (3) mit
- mindestens zwei Passformsegmenten (4), wobei mindestens eines der Passformsegmente (4) relativ zu dem mindestens einen anderen Passformsegment (4) beweglich gelagert ist, wobei die Passformsegmente (4) derart ausgebildet sind, die Lenkvorrichtung (3), insbesondere den Lenkradkranz (31) der Lenkvorrichtung (3), zumindest abschnittsweise umschließen zu können;
- einer Aufnahme (5) zum Aufnehmen der Lenkvorrichtung (3);
- einem Antriebsmechanismus zum Verlagern des mindestens einen beweglich gelagerten Passformsegmentes (4) auf die Lenkvorrichtung (3) zu;
- **dadurch gekennzeichnet, dass** die mindestens zwei Passformsegmente (4) seitlich auf die Lenkvorrichtung (3) zu oder von ihr weg beweglich sind; und
- mindestens ein Fixierelement (9), das ausgebildet ist, das mindestens eine Materialsegment (2) vor einem Zusammenführen der Passformsegmente (4) punktuell an der Lenkvorrichtung (3) zu fixieren.

2. Vorrichtung (1) nach Anspruch 1, **dadurch gekennzeichnet, dass** die mindestens zwei Passformsegmente (4) zu einer Passform für die Lenkvorrichtung (3) zusammenfügbar sind.

3. Vorrichtung (1) nach Anspruch 1 oder 2, **dadurch gekennzeichnet, dass**
- die Passformsegmente (4) zumindest teilweise gekrümmt verlaufen und/oder
- die Passformsegmente (4) in der Art ausgebildet sind, zusammen mindestens 50%, mindestens 65% oder 90% vom Umfang des radialen Querschnitts des Lenkradkranzes (31) umschließen zu können, und/oder
- die Passformsegmente (4) auswechselbar sind und/oder
- die Passformsegmente (4) aus einem silikonbeschichteten Stahl oder einem silikonbeschichtetem Aluminium bestehen.

4. Vorrichtung (1) nach einem der vorhergehenden Ansprüche, **dadurch gekennzeichnet, dass** die Vorrichtung (1) ein Gehäuse (6) aufweist, das einen Innenraum (7) umgibt.

5. Vorrichtung (1) nach Anspruch 4, **dadurch gekennzeichnet, dass** sich die Aufnahme (5) im Innenraum (7) des Gehäuses (6) befindet und einen Freiraum (12) zum Aufnehmen einer Lenkvorrichtung (3) aufweist, insbesondere wobei der Freiraum und/ oder die Aufnahme zum Aufnehmen einer Lenkvorrichtung in ihrer Form entsprechend der Form der Lenkvorrichtung, insbesondere kreisförmig oder oval, ausgebildet ist.

6. Vorrichtung (1) nach einem der vorhergehenden Ansprüche, **dadurch gekennzeichnet, dass** die Aufnahme (5) eine Haltevorrichtung (8) zum Aufnehmen einer Lenkvorrichtung (3) aufweist.

7. Vorrichtung (1) nach einem der vorhergehenden Ansprüche, **dadurch gekennzeichnet, dass** die Vorrichtung (1) mindestens eine Druckerzeugungseinheit (10) zum Anlegen eines Druckes an mindestens eines der Passformsegmente (4) aufweist, wobei Druckerzeugungseinheit (10) insbesondere eine Unterdruckerzeugungseinheit ist.

8. Vorrichtung (1) nach einem der vorhergehenden Ansprüche, **dadurch gekennzeichnet, dass** die Vorrichtung (1) mindestens ein beheizbares Passformsegment aufweist und mindestens eine Heizeinheit, die mit dem mindestens einem beheizbaren Passformsegment in Verbindung steht, insbesondere wobei an dem mindestens einen beheizbaren Passformsegment mindestens ein Temperatursensor angeordnet ist.

9. Verfahren zum stoffschlüssigen Verbinden von mindestens einem Materialsegment (2) mit einer Lenkvorrichtung (3) unter Verwendung einer Vorrichtung (1) nach einem der vorhergehenden Ansprüche umfassend folgende Verfahrensschritte:
i) in Kontakt bringen mindestens eines Abschnitts der Lenkvorrichtung (3) mit mindestens einem Materialsegment (2), wobei entweder das mindestens eine Materialsegment (2) auf der zur Lenkvorrichtung (3) zugewandten Seite und/oder die Lenkvorrichtung (3) auf der zum Materialsegment (2) zugewandten Seite mindestens ein Haftmittel aufweist, oder auf die der Lenkvorrichtung (3) zugewandten Seite des mindestens einen Materialsegments (2) und/oder auf die dem Materialsegment (2) zugewandten Seite der Lenkvorrichtung (3) ein Haftmittel aufgebracht wird; und anschließend
ii) Zusammenführen der Passformsegmente (4) der Vorrichtung (1) mit Hilfe des Antriebsmechanismus, in der Art, dass die Passformsegmente (4) die Lenkvorrichtung (3) zumindest abschnittsweise umschließen und dass das zwischen der Lenkvorrichtung (3) und den Passformsegmenten (4) angeordnete mindestens eine Materialsegment (2) gegen die Lenkvorrichtung (3) gedrückt wird, wobei die mindestens zwei Passformsegmente (4) seitlich auf die Lenkvorrichtung (3) zu oder von ihr weg bewegt werden, und wobei das mindestens eine Materialsegment (2) vor dem Zusammenführen der Passformsegmente (4) punktuell an der Lenkvorrichtung (3) durch ein Fixierelement (9) fixiert wird.

10. Verfahren nach Anspruch 9, **dadurch gekennzeichnet, dass** gleichzeitig zu Schritt ii) der mindestens eine Abschnitt der Lenkvorrichtung (3) durch mindestens ein beheiztes Passformsegment erhitzt wird.

11. Verfahren nach Anspruch 9 oder 10, **dadurch gekennzeichnet, dass** zwischen den Verfahrensschritten i) und ii) ein Vernähen des mindestens einen Materialsegmentes (2) mit sich selbst erfolgt oder nach dem Verfahrensschritt ii) ein Vernähen des mindestens einen Materialsegmentes (2) mit sich selbst erfolgt.

12. Verfahren nach einem der Ansprüche 9 bis 11, **dadurch gekennzeichnet, dass** nach dem Verfahrensschritt i) ein Anordnen des Materialsegmentes (2) an der Lenkvorrichtung (3) erfolgt, anschließend das Materialsegment (2) mit sich selbst derart vernäht wird, dass es die Lenkvorrichtung (3) im radialen Querschnitt betrachtet zumindest näherungsweise vollständig umschließt, und dann der Verfahrensschritt ii) durchgeführt wird.

13. Verfahren nach einem der Ansprüche 9 bis 12, **dadurch gekennzeichnet, dass** das mindestens eine Materialsegment (2) Leder oder Kunstleder umfasst oder aus solchem besteht.

14. Verfahren nach einem der Ansprüche 9 bis 13, **dadurch gekennzeichnet, dass** das mindestens eine Materialsegment (2) ein Funktionselement, insbesondere eine Heizmatte, eine Sensormatte oder eine Softmatte, umfasst oder ein solches ist.

15. Verfahren nach einem der Ansprüche 9 bis 14, **dadurch gekennzeichnet, dass** das Aufbringen des Haftmittels auf die der Lenkvorrichtung (3) zugewandten Seite des mindestens einen Materialsegments (2) und/oder auf die dem Materialsegment (2) zugewandten Seite der Lenkvorrichtung (3) maschinell, insbesondere durch Aufsprühen, erfolgt.

## Claims

1. Device (1) for an integrally bonded connection of at least one material segment (2) to a steering device (3), comprising
- at least two fitting segments (4), wherein at least one of the fitting segments (4) is mounted so as to be movable relative to the at least one other fitting segment (4), wherein the fitting segments (4) are configured so as to be able to surround the steering device (3), in particular the steering wheel rim (31) of the steering device (3), at least in portions;
- a receptacle (5) for receiving the steering device (3);
- a drive mechanism for displacing the at least one movably mounted fitting segment (4) toward the steering device (3);
**characterised in that**
- the at least two fitting segments (4) are movable laterally towards the steering device (3) or away from it; and
- at least one fixing element (9) which is configured for fixing the at least one material segment (2) at points on the steering device (3), prior to the fitting segments (4) being brought together.

2. Device (1) according to claim 1, **characterised in that** the at least two fitting segments (4) can be joined together to form a close fit for the steering device (3).

3. Device (1) according to either claim 1 or claim 2, **characterised in that**
- the fitting segments (4) extend in a curved manner at least in part, and/or
- the fitting segments (4) are configured in such a way that they can together surround at least 50%, at least 65% or 90% of the periphery of the radial cross-section of the steering wheel rim (31), and/or
- the fitting segments (4) are interchangeable, and/or
- the fitting segments (4) consist of a silicone-coated steel or a silicone-coated aluminium.

4. Device (1) according to any of the preceding claims, **characterised in that** the device (1) comprises a housing (6) that surrounds an interior (7).

5. Device (1) according to claim 4, **characterised in that** the receptacle (5) is located in the interior (7) of the housing (6) and comprises a free space (12) for receiving a steering device (3), in particular wherein the free space and/or the receptacle for receiving a steering device is configured in a shape corresponding to the shape of the steering device, in particular circular or oval.

6. Device (1) according to any of the preceding claims, **characterised in that** the receptacle (5) comprises a holding device (8) for receiving the steering device (3).

7. Device (1) according to any of the preceding claims, **characterised in that** the device (1) comprises at least one pressure generating unit (10) for applying a pressure to at least one of the fitting segments (4), wherein the pressure generating unit (10) is in particular a negative pressure generating unit.

8. Device (1) according to any of the preceding claims, **characterised in that** the device (1) comprises at least one heatable fitting segment and at least one heating unit which is connected to the at least one heatable fitting segment, in particular wherein at least one temperature sensor is arranged on the at least one heatable fitting segment.

9. Method for an integrally bonded connection of at least one material segment (2) to a steering device (3) using a device (1) according to any of the preceding claims, comprising the following method steps:
i) bringing at least one portion of the steering device (3) into contact with at least one material segment (2), wherein either the at least one material segment (2) comprises at least one adhesive agent on the side facing the steering device (3), and/or the steering device (3) comprises at least one adhesive agent on the side facing the material segment (2), or an adhesive agent is applied to the side of the at least one material segment (2) facing the steering device (3) and/or to the side of the steering device (3) facing the material segment (2); and subsequently
ii) bringing together the fitting segments (4) of the device (1) with the aid of the drive mechanism, in such a way that the fitting segments (4) surround the steering device (3) at least in portions and that the at least one material segment (2) arranged between the steering device (3) and the fitting segments (4) is pressed against the steering device (3), wherein the at least two fitting segments (4) are moved laterally towards the steering device (3) or away from it, and wherein the at least one material segment (2) is fixed at points on the steering device (3) by a fixing element (9), prior to the fitting segments (4) being brought together.

10. Method according to claim 9, **characterised in that** at the same time as step ii), the at least one portion of the steering device (3) is heated by at least one heated fitting segment.

11. Method according to either claim 9 or claim 10, **characterised in that** between method steps i) and ii) the at least one material segment (2) is stitched to itself, or after method step ii) the at least one material segment (2) is stitched to itself.

12. Method according to any of claims 9 to 11, **characterised in that** after method step i) the material segment (2) is arranged on the steering device (3), and subsequently the material segment (2) is stitched to itself in such a way that it at least approximately completely surrounds the steering device (3) viewed in radial cross-section, and then method step ii) is carried out.

13. Method according to any of claims 9 to 12, **characterised in that** the at least one material segment (2) comprises or consists of leather or artificial leather.

14. Method according to any of claims 9 to 13, **characterised in that** the at least one material segment (2) comprises or is a functional element, in particular a heating mat, a sensor mat, or a soft mat.

15. Method according to any of claims 9 to 14, **characterised in that** the application of the adhesive agent to the side of the at least one material segment (2) facing the steering device (3) and/or to the side of the steering device (3) facing the material segment (2) is carried out by machine, in particular by spraying on.

## Revendications

1. Dispositif (1) de raccordement par liaison de matière d'au moins un segment de matériau (2) à un dispositif de direction (3), comprenant
- au moins deux segments à adaptation de forme (4), dans lequel au moins un des segments à adaptation de forme (4) est monté de manière mobile par rapport à l'au moins un autre segment à adaptation de forme (4), dans lequel les segments à adaptation de forme (4) sont réalisés de manière à pouvoir renfermer au moins par endroits le dispositif de direction (3), en particulier la couronne de volant (31) du dispositif de direction (3) ;
- un réceptacle (5) destiné à recevoir le dispositif de direction (3) ;
- un mécanisme d'entraînement destiné à déplacer l'au moins un segment à adaptation de forme (4) monté de manière mobile en direction du dispositif de direction (3) ;
**caractérisé en ce que**
- les au moins deux segments à adaptation de forme (4) sont mobiles latéralement en direction du dispositif de direction (3) ou de manière à s'en éloigner ; et
- au moins un élément de fixation (9) est réalisé pour fixer l'au moins un segment de matériau (2) ponctuellement sur le dispositif de direction (3) avant de regrouper les segments à adaptation de forme (4).

2. Dispositif (1) selon la revendication 1, **caractérisé en ce que** les au moins deux segments à adaptation de forme (4) peuvent être assemblés en une forme adaptée pour le dispositif de direction (3).

3. Dispositif (1) selon la revendication 1 ou 2, **caractérisé en ce que**
- les segments à adaptation de forme (4) s'étendent au moins en partie de manière incurvée et/ou
- les segments à adaptation de forme (4) sont réalisés de manière à pouvoir renfermer conjointement au moins 50 %, au moins 65 % ou 90 % de la périphérie de la section transversale radiale de la couronne de volant (31), et/ou
- les segments à adaptation de forme (4) peuvent être remplacés, et/ou
- les segments à adaptation de forme (4) sont constitués d'un acier revêtu de silicone ou d'un aluminium revêtu de silicone.

4. Dispositif (1) selon l'une quelconque des revendications précédentes, **caractérisé en ce que** le dispositif (1) présente un boîtier (6), qui entoure l'espace intérieur (7).

5. Dispositif (1) selon la revendication 4, **caractérisé en ce que** le réceptacle (5) se trouve dans l'espace intérieur (7) du boîtier (6) et présente un espace libre (12) pour recevoir un dispositif de direction (3), en particulier dans lequel l'espace libre et/ou le réceptacle destiné à recevoir un dispositif de direction sont réalisés dans leur forme de manière à correspondre à la forme du dispositif de direction, en particulier avec une forme circulaire ou de manière ovale.

6. Dispositif (1) selon l'une quelconque des revendications précédentes, **caractérisé en ce que** le réceptacle (5) présente un dispositif de maintien (8) destiné à recevoir un dispositif de direction (3).

7. Dispositif (1) selon l'une quelconque des revendications précédentes, **caractérisé en ce que** le dispositif (1) présente au moins une unité de génération de pression (10) destinée à appliquer une pression sur au moins un des segments à adaptation de forme (4), dans lequel l'unité de génération de pression (10) est en particulier une unité de génération de dépression.

8. Dispositif (1) selon l'une quelconque des revendications précédentes, **caractérisé en ce que** le dispositif (1) présente au moins un segment à adaptation de forme pouvant être chauffé et au moins une unité chauffante, qui est en liaison avec l'au moins un segment à adaptation de forme pouvant être chauffé, en particulier dans lequel au moins un capteur de température est disposé sur l'au moins un segment à adaptation de forme pouvant être chauffé.

9. Procédé de raccordement par liaison de matière d'au moins un segment de matériau (2) à un dispositif de direction (3) en utilisant un dispositif (1) selon l'une quelconque des revendications précédentes, comprenant des étapes de procédé suivants :
i) la mise en contact d'au moins une section du dispositif de direction (3) avec au moins un segment de matériau (2), dans lequel soit l'au moins un segment de matériau (2) présente au moins un adhésif sur le côté tourné vers le dispositif de direction (3) et/ou le dispositif de direction (3) présente au moins un adhésif sur le côté tourné vers le segment de matériau (2), soit un adhésif est appliqué sur le côté tourné vers le dispositif de direction (3) de l'au moins un segment de matériau (2) et/ou sur le côté tourné vers le segment de matériau (2) du dispositif de direction (3) ; puis
ii) le regroupement des segments à adaptation de forme (4) du dispositif (1) à l'aide du mécanisme d'entraînement de telle manière que les segments à adaptation de forme (4) renferment au moins en partie le dispositif de direction (3), et que l'au moins un segment de matériau (2) disposé entre le dispositif de direction (3) et les segments à adaptation de forme (4) est comprimé contre le dispositif de direction (3), dans lequel les au moins deux segments à adaptation de forme (4) sont déplacés latéralement en direction du dispositif de direction (3) ou de manière à s'en éloigner, et dans lequel l'au moins un segment de matériau (2) est fixé par un élément de fixation (9) ponctuellement sur le dispositif de direction (3) avant de regrouper les segments à adaptation de forme (4).

10. Procédé selon la revendication 9, **caractérisé en ce que,** de manière simultanée à l'étape ii), l'au moins une section du dispositif de direction (3) est réchauffée par au moins un segment à adaptation de forme chauffé.

11. Procédé selon la revendication 9 ou 10, **caractérisé en ce qu'**entre les étapes de procédé i) et ii), l'au moins un segment de matériau (2) est cousu avec lui-même, ou après l'étape de procédé ii), l'au moins un segment de matériau (2) est cousu avec lui-même.

12. Procédé selon l'une quelconque des revendications 9 à 11, **caractérisé en ce qu'**après l'étape de procédé i), le segment de matériau (2) est disposé sur le dispositif de direction (3), puis le segment de matériau (2) est cousu avec lui-même de telle manière qu'il renferme au moins quasiment en totalité vu dans la section transversale radiale le dispositif de direction (3), puis l'étape de procédé ii) est mise en oeuvre.

13. Procédé selon l'une quelconque des revendications 9 à 12, **caractérisé en ce que** l'au moins un segment de matériau (2) comprend du cuir ou du cuir synthétique ou en est constitué.

14. Procédé selon l'une quelconque des revendications 9 à 13, **caractérisé en ce que** l'au moins un segment de matériau (2) comprend un élément fonctionnel, en particulier un tapis chauffant, un tapis de capteurs ou un tapis souple ou est un élément de ce type.

15. Procédé selon l'une quelconque des revendications 9 à 14, **caractérisé en ce que** l'application de l'adhésif sur le côté tourné vers le dispositif de direction (3) de l'au moins un segment de matériau (2) et/ou sur le côté tourné vers le segment de matériau (2) du dispositif de direction (3) est effectuée mécaniquement, en particulier par pulvérisation.
